# EUROPÄISCHE PATENTANMELDUNG

(11) **EP 0 860 402 A2**
(43) Veröffentlichungstag der Anmeldung: **26.08.1998**
(21) Anmeldenummer: 98103141.2
(22) Anmeldetag: 23.02.1998
(51) Int. Cl.: C02F 11/00, C02F 11/14

(54) **Verfahren zum Aufbereiten von Rohschlämmen**

(30) Priorität: 21.02.1997 DE 19707036
(71) Anmelder: Zinke, Bernhard, 03044 Cottbus (DE)
(72) Erfinder: Zinke, Bernhard, 03044 Cottbus (DE)
(74) Vertreter: Zeitler & Dickel

(57) **Zusammenfassung**

Bei einem Verfahren zum Aufbereiten von Rohschlämmen, insbesondere aus Kläranlagen, wird derart vorgegangen, daß dem Rohschlamm eine aus dem Rauchgasstrom einer Großverbrennungsanlage ausgehaltene Flugasche mit nicht dominierendem alumosilikatischem Mineralbestand beigemischt wird, wobei soviel Flugasche beigemischt wird, daß sich ein homogenes Flüssigstabilisat mit einem pH-Wert von wenigstens 11,7 einstellt, wobei anschließend mit nichtenergieintensiven und technologisch einfachen Verfahrensschritten ein bodenverbesserndes Substrat gewonnen wird.

## Beschreibung

Die Erfindung betrifft ein Verfahren zum Aufbereiten von Rohschlämmen gemäß dem Oberbegriff des Anspruchs 1.

Im Rahmen der Aufbereitung von in Kläranlagen eingeleiteten Abwässern werden gegenwärtig Klärschlämme auf der Grundlage eines energieaufwendigen Klärschlammaushalteprozesses aus feststoffangereicherten Abwässern als Rohschlamm erzeugt. Hierbei erhält der aus dem Rohschlamm ausgehaltene Klärschlamm mit hohem Energieaufwand eine Feststoffanreicherung von lediglich 1,5 bis 6,5 % Feststoffanteil im Rohschlamm auf einen Gesamtfeststoffanteil von ca. 20 bis 35 %. Der sich auf diese Weise ergebende Grundstoff fuhr Substrate bzw. Komposte oder Biodünger wird dann weiteren, sehr langsam ablaufenden biologischen Prozessen unterzogen, wie z.B. einer Kompostierung nach vorheriger Aufbereitung, nach Homogenisierung und Vermischung mit ausgewählten Böden.

Derartige Verfahren sind aufwendig und zeit- sowie kostenintensiv. Darüber hinaus haben sie den Nachteil, daß sie nur sehr begrenzt anwendbar sind. So z.B. werden bei kontaminierten Rohschlämmen als Prozeßgrundlage infolge Dioxin- und Furanbelastungen sowie infolge störender Schwermetallbelastungen und anderen Kombinationen mit diesen Verfahren keine brauchbaren Ergebnisse zum Entsorgen des Klärschlammes erzielt. Im übrigen sind diese Verfahren stark abhängig von Witterungseinflüssen, was deren Anwendung weiter kompliziert.

Der Erfindung liegt daher die Aufgabe zugrunde, ein Verfahren der o.g. Art zu schaffen, das die vorgenannten Nachteile beseitigt und eine Rohschlammentwässerung und Stabilisatherstellung vereinfacht, mit verschiedensten Rohschlämmen als Substratgrundsubstanzen, auch kontaminierten, ausführbar ist und die aufwendige Art und Weise des Aushaltens ersetzt.

Diese Aufgabe wird erfindungsgemäß durch ein Verfahren der o.g. Art mit den in Patentanspruch 1 gekennzeichneten Merkmalen gelöst. Vorteilhafte Ausgestaltungen hiervon sind in den weiteren Ansprüchen beschrieben.

Erfindungsgemäß ist vorgesehen, daß dem Rohschlamm eine aus dem Rauchgasstrom einer Großverbrennungsanlage ausgehaltene Flugasche mit nichtdominierendem alumosilikatischem Mineralbestand beigemischt wird, wobei soviel Flugasche beigemischt wird, daß sich ein homogenes Flüssigstabilisat mit einem pH-Wert von wenigstens 11,7 einstellt.

Dies hat den Vorteil, daß auf einfache Weise aus dem Rohschlamm ein fest fixiertes Stabilisat erzeugt wird, welches kein unzulässig pflanzenwirksames Schadstoffpotential mehr aufweist, letztendlich eine geringe Schüttdichte des entstehenden trockenen Substrates im Bereich von 0,25 - 0,45 t/m³ absichert und zusätzliche Bindungskapazitäten dem entstehenden Substrat garantiert, was u.a. die pflanzenwirksame Schadstoffaufnahme weitgehend unterbindet (Bodenauswaschverhalten).

Zweckmäßigerweise wird der Rohschlamm eines Klärwerkes in Form von Schlamm vor Faulprozessen (Primärschlamm als Absetzschlamm und Sekundärschlamm als Belebtschlamm) bzw. als zusammengeführter Mischschlamm oder Einzelschlamm nach Faulprozessen verwendet.

Der Rohschlamm hat dabei in vorteilhafter Weise einen Gehalt an Trockensubstanz von etwa 1,5 % bis 6,5 %.

Um eine geeignete Menge Flugasche in den Rohschlamm einzumischen, erfolgt dies vorzugsweise in einer solchen Menge, bis sich nach einer prozeßverträglichen Mischzeit eine Freisetzung geruchsintensiver Brüden, insbesondere mit hohem Ammoniakgehalt, einstellt. Dieser Zeitpunkt könnte auch mit geeigneten Mitteln meßtechnisch erfaßt werden.

Zweckmäßigerweise beträgt die Kontaktzeit der Flugasche mit dem Rohschlamm wenigstens 5 min.

Zur Prozeßbeschleunigung ist es vorteilhaft, daß eine feinkörnig fraktioniert ausgehaltene Flugasche aus der Rauchgasreinigung, insbesondere aus der zweiten und/oder dritten Stufe der elektrischen Gasreinigung, verwendet wird. Hierbei wird besonders bevorzugt eine Absonderung von grobkörnigen Flugaschefraktionen, insbesondere oberhalb einer Korngröße von 63 µm, verwendet. Ferner wird zweckmäßigerweise die verwendete Flugasche mit einem mineralischen Anreger im Feinkornbereich, insbesondere ≤ 63 µm, zur Anquellbeschleunigung alkalisch aktiviert, wobei der Anreger bevorzugt Portlandzement ist.

Ein gut weiter aufbereitbares Flüssigstabilisat aus Rohschlamm und eingemischter Flugasche wird dadurch besonders schnell erzielt, daß Flugasche mit schnell anquellendem Verhalten und in einem basischen Milieu eingemischt wird.

Zweckmäßigerweise hat die Flugasche eine Rohdichte von 2,5 g/cm³ oder mehr und in vorteilhafter Weise einen Mindestfeinkorngehalt von 63 µm - Korn von 50 % oder mehr.

Für eine noch bessere und intensivere Vermischung wird vor dem Einmischen der Flugasche in den Rohschlamm eine Suspension mit einem Verhältnis von Rohschlamm zu Flugasche von etwa 0,3 - 0,8 hergestellt, wobei diese Suspension anstelle trockener Flugasche eingemischt wird.

Prozeßunterstützend wird in vorteilhafter Weise nach und/oder während des Einmischens der Flugasche Wärmeenergie zugeführt.

Ein Erwärmen des entstandenen Flüssigstabilisates unterstützt in vorteilhafter Weise nachfolgende Bearbeitungsschritte.

Zweckmäßigerweise sollte die Flugascheeinmischung 400 %, bezogen auf den organischen Anteil einer Rohschlammtrockensubstanz, nicht wesentlich überschreiten.

Eine weitere Verbesserung der Weiterverwertbarkeit des entstehenden Stabilisats zum Substrat wird dadurch erzielt, daß nährstoffhaltige und/oder bodenverbessernde Stoffe beigemischt werden.

Zur Herstellung eines weiter verwendbaren Stabilisats wird in vorteilhafter Weise das Flüssigstabilisat einer einfachen energiearmen Entwässerung unterzogen, wobei das Stabilisat einen Trockensubstanzgehalt von 40 % oder mehr erhält. Das getrocknete Stabilisat wird anschließend einer Liegezeit unterworfen, bis sich eine vorbestimmte Anquellverfestigung bzw. Steifigkeit eingestellt hat, die eine Zerkleinerung des Stabilisates auf Frischsubstratgröße erlaubt, ohne daß die zerkleinerten Substratpartikel bei Haufwerkslagerungen sich verkitten bzw. verbinden. Danach wird das Stabilisat auf eine vorbestimmte Korngröße von beispielsweise 20 mm oder kleiner zerkleinert und anschließend einer Selbstaustrocknung auf einen Trockensubstanzgehalt von etwa 80 % oder mehr unterworfen.

Mittels des erfindungsgemäßen Verfahrens wird in vorteilhafter Weise der Rohschlamm entwässert und ein bodenverbesserndes Substrat hergestellt.

Weitere Merkmale, Vorteile und vorteilhafte Ausgestaltungen des erfindungsgemäßen Verfahrens ergeben sich aus der nachfolgenden Beschreibung.

Der Rohschlamm eines Klärwerks wird beispielsweise in Form von Schlamm vor Faulprozessen (Primärschlamm als Absetzschlamm und Sekundärschlamm als Belebtschlamm) bzw. als zusammengeführter Mischschlamm oder als Einzelschlamm nach Faulprozessen mit einem Gehalt an Trockensubstanz zwischen 1,5 - 6,5 % als Ausgangssubstanz für das erfindungsgemäße Verfahren verwendet. Diesem Rohschlamm wird nichtalumosilikatische Flugasche beigemischt. Dies ist eine Flugasche, die keinen dominierenden Tonmineralanteil in der Flugaschemineralsubstanz aufweist. Sie weist ein schnell anquellendes Verhalten im basischen Milieu und eine Rohdichte oberhalb 2,5 g/cm³ auf. Der Mindestfeinkorngehalt an 63 µm - Korn beträgt dabei vorzugsweise 50 % oder mehr. Diese Flugasche wird einem der o.g. Rohschlämme in einer Größenordnung zugemischt, bis sich nach einer vertretbaren Mischzeit letztendlich ein homogenes Flüssigstabilisat mit einem pH-Wert oberhalb von 11,7 einstellt. Ferner wird die Zugabemenge an Flugasche derart eingestellt, daß eine Freisetzung geruchsintensiver Brüden, die vor allem Ammoniak enthalten, zu verzeichnen ist.

Durch die Zugabe der oben charakterisierten Flugasche bei einer Kontaktierzeit der Flugasche mit dem Rohschlamm von mindestens 5 min. bei hoher Einmischintensität werden folgende Flüssigstabilisatbedingungen als Grundlage für nachfolgende Prozesse eingestellt:

Das letztendlich aus dem Stabilisat gewonnene Substrat hat eine geringe Dichte bei hohem Wasseraufnahmevermögen, ein hohes Wasserhaltevermögen nach der Aufnahme, ein gutes Bodenauflockerungsverhalten, ein Bodenreinigungsverhalten durch Substratschadstoffbindung und ist ein Nährstoffträger mit guter Pflanzenwirksamkeit.

Eine schnelle Erreichung der prozeß- und endproduktabhängigen Milieubedingungen mit minimierter Zugabemenge an Flugasche kann durch folgende Schritte erreicht werden, die einzeln oder in Kombination ausgeführt werden:
1. Einsatz einer feinkörnig fraktioniert ausgehaltenen Flugasche aus der Rauchgasreinigung, beisp. aus der zweiten und/oder dritten Stufe der elektrischen Rauchgasreinigung.
2. Absonderung der grobkörnigen Flugaschefraktionen, insbesondere oberhalb der Korngröße von 63 µm.
3. Alkalische Aktivierung der eingesetzten Flugasche mit einem mineralischen Anreger im Feinkornbereich, insbesondere ≤ 63 µm, wie z.B. fraktionierter Portlandzement, als Anquellbeschleuniger.
4. Zusätzliche Vorerschließungszeit der Flugasche mit dem Rohschlamm in Form einer Suspension, wobei das Verhältnis von Rohschlamm zu Flugasche 0,3 - 0,8 beträgt und diese Suspension dann anstelle der trockenen Flugasche dem Rohschlamm beigemischt wird.
5. Erwärmung des Flüssigstabilisates aus Rohschlamm und eingemischter Flugasche.

Diese prozeßverbessernden Maßnahmen können einzeln oder wahlweise in Kombination bevorzugt dann zum Einsatz kommen, wenn eine Flugascheeinmischung von 400 %, bezogen auf den organischen Anteil der Rohschlammtrockensubstanz, keine ausreichenden Aufbereitungsergebnisse beim nachfolgenden Entwässerungsprozeß erbringt. In dem nachfolgenden Entwässerungsprozeß muß eine saubere Filterwasserabtrennung ohne wesentliche Anteile an Feststoff sowie mit geringem biologischem Sauerstoffbedarf und mit geringem Wasserschadstoffpotential erreicht werden. Ferner sollte der bei dem Gewinnen des Erststabilisates aus dem Flüssigstabilisat erhaltene Filterkuchen weitgehend immobil durch Schadstoffbindung sein. Die Abtrennung des Filterwassers ist ferner mit einer o.g. ausreichenden Reinheit energiearm zu erreichen. Schließlich muß das Erststabilisat mit nachgewiesener Wasserlagerungsstabilität, d.h. kein Auflösen bzw. Aufweichen bei Wasserlagerung, ausreichend entwässert sein.

Neben der Flugascheeinmischung im Rohschlamm werden bevorzugt zusätzlich Stoffe beigemischt, welche, bezogen auf das später entstehende Substrat, den Nährstoffgehalt erhöhen bzw. der Bodenverbesserung, wie beisp. dem Wasserhaltevermögen, der Auflockerungscharakteristik oder der Schadstoffabsorption, dienlich sind. Diese Stoffe werden zweckmäßigerweise derart ausgesucht, daß sie ein schnelles Anquellen der Flugasche im Flüssigstabilisat unter Erreichen eines schnellen basischen Flüssigstabilisatmilieus oberhalb des pH-Wertes von 11,7 nicht hindern.

Das so erreichte steuerbare Flüssigstabilisat wird einer einfachen Entwässerungstechnologie mit minimierter Entwässerungsenergie zugeführt. Hierbei wird das Filtrat als Klarwasser, z.B. für Klärwerkkreislauffahrweise mit nur geringer Trübung, abgegeben, und es entsteht ein Stabilisat mit einem Trockensubstanzgehalt oberhalb 40 % mit Wasserlagerungsstabilität ohne wesentliche Auslauggefährdung hydraulisch stabil, d.h. im Wasser liegend erhärtend.

Dieses Stabilisat wird als Erststabilisat einer Trocken-Liegezeit unterworfen und nach einer vorbestimmten Anquellungsanfangsverfestigung (Ansteifung) oder nach ausreichender Entwässerungssteifigkeit einer einfachen Zerkleinerung unterzogen. Diese Zerkleinerung erfolgt in Substratkörner von 20 mm oder kleiner, ohne daß ein dann abgelagertes Haufwerk zu Verbackungen bzw. Verkittungen führt.

Durch eine Haufwerksliegezeit wird das so "hygienisierte" und weitgehend geruchsfreie Frischsubstrat einer Selbstaustrocknung unterzogen, bis es einen Trockensubstanzgehalt von etwa 80 % oder mehr hat. Dies wird vorzugsweise durch gute Belüftung und/oder Wärmezufuhr beschleunigend unterstützt. Hierdurch entstehen beliebig weiter lagerfähige und abgabefähige Substrate für beispielsweise die Schüttgutmassenabgabe bzw. Gebindeabgabe.

Diese Substrate haben gegenüber den durch herkömmliche Klärschlammbehandlung erzeugten Produkten folgende vorteilhafte Eigenschaften:
- Aus dem Rohschlamm wird ein die Rohschlammschadstoffe fest fixierendes Substrat ohne pflanzenwirksames Schadstoffpotential erzeugt.
- Das Substrat hat eine geringe Schüttdichte im Bereich von 0,25 - 0,45 t/m³ und ein hohes Wassereinbindungsvermögen von etwa 80 % - 120 %, bezogen auf die Eigenmasse.
- Das Substrat zeigt ein hohes Wasserhaltevermögen und eine extrem geringe Austrocknungsgeschwindigkeit.
- Es ergibt sich ein gutes Bodenauflockerungsverhalten.
- Eine Schadstoffaufnahme vom Boden zur Pflanze ist dadurch minimiert, daß das Substrat ein gutes Bodenauswaschverhalten durch Adsorptionsvermögen an Schadstoffpotential aufweist.
- Das Substrat ist witterungsstabil, beliebig lagerungsfähig, und das Ausbringverhalten ist ebenfalls witterungsunabhängig.

## Patentansprüche

1. Verfahren zum Aufbereiten von Rohschlämmen, insbesondere aus Kläranlagen,
**dadurch gekennzeichnet,**
daß dem Rohschlamm eine aus dem Rauchgasstrom einer Großverbrennungsanlage ausgehaltene Flugasche mit nicht dominierendem alumosilikatischem Mineralbestand beigemischt wird, wobei soviel Flugasche beigemischt wird, daß sich nach einer bestimmten Misch- und Kontaktierzeit ein homogenes Flüssigstabilisat mit einem pH-Wert von wenigstens 11,7 einstellt.

2. Verfahren nach Anspruch 1, dadurch gekennzeichnet, daß der Rohschlamm eines Klärwerks in Form von Schlamm vor Faulprozessen (Primärschlamm als Absetzschlamm und Sekundärschlamm als Belebtschlamm) bzw. als zusammengeführter Mischschlamm oder Einzelschlamm nach Faulprozessen verwendet wird.

3. Verfahren nach Anspruch 1 oder 2, dadurch gekennzeichnet, daß der Rohschlamm einen Gehalt an Trockensubstanz von etwa 1,5 % bis etwa 6,5 % hat.

4. Verfahren nach einem der vorhergehenden Ansprüche, dadurch gekennzeichnet, daß die Flugasche aus Rauchgasreinigungsanlagen von staub- bzw. wirbelschichtbefeuerten Kohlekraftwerken ausgehalten wird.

5. Verfahren nach einem der vorhergehenden Ansprüche, dadurch gekennzeichnet, daß soviel Flugasche eingemischt wird, bis sich nach einer prozeßverträglichen Mischzeit eine Freisetzung geruchsintensiver Brüden, insbesondere mit hohem Ammoniakgehalt, einstellt.

6. Verfahren nach einem der vorhergehenden Ansprüche, dadurch gekennzeichnet, daß die Kontaktierzeit der Flugasche mit dem Rohschlamm wenigstens 5 min. beträgt.

7. Verfahren nach einem der vorhergehenden Ansprüche, dadurch gekennzeichnet, daß eine feinkörnig fraktioniert ausgehaltene Flugasche aus der Rauchgasreinigung, insbesondere aus der zweiten und/oder dritten Stufe der elektrischen Gasreinigung, verwendet wird.

8. Verfahren nach einem der vorhergehenden Ansprüche, dadurch gekennzeichnet, daß eine Absonderung von grobkörnigen Flugaschefraktionen, insbesondere oberhalb einer Korngröße von 63 µm, verwendet wird.

9. Verfahren nach einem der vorhergehenden Ansprüche, dadurch gekennzeichnet, daß die verwendete Flugasche mit einem mineralischen Anreger im Feinkornbereich, insbesondere ≤ 63 µm, zur Anquellbeschleunigung alkalisch aktiviert wird.

10. Verfahren nach Anspruch 9, dadurch gekennzeichnet, daß als Anreger ein fraktionierter Portlandzement verwendet wird.

11. Verfahren nach einem der vorhergehenden Ansprüche, dadurch gekennzeichnet, daß Flugasche mit schnell anquellendem Verhalten eingemischt wird.

12. Verfahren nach einem der vorhergehenden Ansprüche, dadurch gekennzeichnet, daß die Flugasche in einem basischen Milieu eingemischt wird.

13. Verfahren nach einem der vorhergehenden Ansprüche, dadurch gekennzeichnet, daß Flugasche mit einer Rohdichte von wenigstens 2,5 g/cm³ verwendet wird.

14. Verfahren nach einem der vorhergehenden Ansprüche, dadurch gekennzeichnet, daß Flugasche mit einem Mindestfeinkorngehalt von 63 µm - Korn von 50 % oder mehr verwendet wird.

15. Verfahren nach einem der vorhergehenden Ansprüche, dadurch gekennzeichnet, daß vor dem Einmischen der Flugasche in den Rohschlamm eine Suspension mit einem Verhältnis von Rohschlamm zu Flugasche von etwa 0,3 bis 0,8 hergestellt und daß diese Suspension anstelle trockener Flugasche eingemischt wird.

16. Verfahren nach einem der vorhergehenden Ansprüche, dadurch gekennzeichnet, daß nach und/oder während des Einmischens der Flugasche Wärmeenergie zugeführt wird.

17. Verfahren nach einem der vorhergehenden Ansprüche, dadurch gekennzeichnet, daß das entstehende Flüssigstabilisat erwärmt wird.

18. Verfahren nach einem der vorhergehenden Ansprüche, dadurch gekennzeichnet, daß maximal etwa 400 % Flugasche, bezogen auf den organischen Anteil einer Rohschlammtrockensubstanz, eingemischt werden.

19. Verfahren nach einem der vorhergehenden Ansprüche, dadurch gekennzeichnet, daß zusätzlich nährstoffhaltige und/oder bodenverbessernde Stoffe beigemischt werden.

20. Verfahen nach einem der vorhergehenden Ansprüche, dadurch gekennzeichnet, daß das Flüssigstabilisat einer einfachen Entwässerung unterzogen wird, derart, daß das Stabilisat einen Trockensubstanzgehalt von 40 % oder mehr erhält.

21. Verfahren nach Anspruch 20, dadurch gekennzeichnet, daß das getrocknete Stabilisat einer Liegezeit unterworfen wird, bis sich eine vorbestimmte Anquellungsanfangsverfestigung oder Steifigkeit durch Entwässerung eingestellt hat.

22. Verfahren nach Anspruch 21, dadurch gekennzeichnet, daß anschließend an die Liegezeit das Stabilisat auf eine vorbestimmte Korngröße zerkleinert wird.

23. Verfahren nach Anspruch 22, dadurch gekennzeichnet, daß die Korngröße maximal 20 mm beträgt.

24. Verfahren nach Anspruch 22 oder 23, dadurch gekennzeichnet, daß das Stabilisat einer Selbstaustrocknung bis auf einen Trockensubstanzgehalt von wenigstens etwa 80 % unterworfen wird.

25. Verfahren nach einem der vorhergehenden Ansprüche, dadurch gekennzeichnet, daß mit dem Verfahren der Rohschlamm energiearm mit vereinfachter Technologie entwässert und ein bodenverbesserndes Substrat hergestellt wird.
